# EUROPÄISCHE PATENTSCHRIFT

(11) **EP 4 386 251 B1**
(45) Veröffentlichungstag und Bekanntmachung des Hinweises auf die Patenterteilung: **25.06.2025**
(21) Anmeldenummer: 23201767.3
(22) Anmeldetag: 05.10.2023
(51) Int. Cl.: F16P 3/14

(54) **SYSTEM MIT EINEM SENSOR UND VERFAHREN MIT EINEM SENSOR ZUR ÜBERWACHUNG MEHRERER SCHUTZBEREICHE**
SYSTEM WITH A SENSOR AND METHOD WITH A SENSOR FOR MONITORING A PLURALITY OF GUARD AREAS
SYSTÈME COMPRENANT UN CAPTEUR ET PROCÉDÉ COMPRENANT UN CAPTEUR POUR SURVEILLER PLUSIEURS ZONES DE PROTECTION

(30) Priorität: 14.12.2022 DE 102022133248
(43) Veröffentlichungstag der Anmeldung: 19.06.2024
(73) Patentinhaber: SICK AG, 79183 Waldkirch (DE)
(72) Erfinder: Weber, Michael, 79114 Freiburg (DE)

(56) Entgegenhaltungen:
- EP-B1- 3 248 740
- EP-B2- 1 781 981

## Beschreibung

Die vorliegende Erfindung betrifft ein System mit einem Sensor zur Überwachung mehrerer Schutzbereiche auf Verletzung durch wenigstens ein Objekt gemäß dem Oberbegriff von Anspruch 1 und ein Verfahren mit einem Sensor zur Überwachung mehrerer Schutzbereiche auf Verletzung durch wenigstens ein Objekt gemäß dem Oberbegriff von Anspruch 8.

Die EP 3 153 885 B1 offenbart Optoelektronische Schutzeinrichtung zur optischen Überwachung mehrerer Schutzbereiche auf Verletzung durch wenigstens ein Objekt und zur Steuerung einer abzusichernden Anlage, mit einem Sensor, um festzustellen, welcher der Schutzbereiche durch das Objekt verletzt wird, im Folgenden als Schutzbereichsverletzung bezeichnet, und welchen Schutzbereich das Objekt verlassen hat, im Folgenden als Schutzbereichsfreigabe bezeichnet, mit einer Steuerung zur Erzeugung und Ausgabe eines Schaltsignals, das ein Freigabesignal zur Freigabe des Anlagenbetriebs ist, wobei die Steuerung dazu ausgebildet ist, das Freigabesignal nur dann auszugeben, wenn die Steuerung eine vorbestimmte Reihenfolge von Ereignissen erkennt, wobei die Ereignisse aus Schutzbereichsverletzungen und Schutzbereichsfreigaben der Schutzbereiche bestehen und jedes Ereignis entweder eine Schutzbereichsverletzung oder eine Schutzbereichsfreigabe ist.

Die DE 10 2019 111 640 A1 offenbart ein Verfahren zum Absichern mindestens einer Gefahrenstelle einer gefahrbringenden Maschine, wobei aus Messdaten mindestens eines 3D-Sensors Objekte in einer Umgebung der Gefahrenstelle erfasst werden und bei drohender Gefahr eine sicherheitsgerichtete Reaktion der Maschine erfolgt, wobei während des Betriebs der Maschine auf mindestens eine neu abzusichernde Gefahrenstelle umgeschaltet und geprüft wird, ob die neu abzusichernde Gefahrenstelle frei von Objekten ist.

Die EP 3 248 740 B1 betrifft ein Industrierobotersystem, umfassend eine Plattform, einen auf der Plattform positionierten Industrieroboter mit einem beweglichen Roboterarm, ein Sensorsystem umfassend zwei Sensoren, wobei jeder der Sensoren dazu konfiguriert ist, Bewegungen innerhalb eines Winkels von mindestens 90° in einer horizontalen Ebene zu erfassen, und die Sensoren dazu angeordnet sind, Bewegungen eines Objekts innerhalb mindestens einer in Bezug auf die Sensoren definierten Sicherheitszone zu erfassen, und eine Steuereinheit, die dazu konfiguriert ist, die Geschwindigkeit des Roboters anzupassen, wenn ein bewegtes Objekt in der mindestens einen Sicherheitszone erfasst wird. Die Plattform ist dazu geeignet, sich in einer Roboterzelle zu befinden, wenn der Roboter in der Roboterzelle Arbeit verrichtet, und das Robotersystem umfasst zwei Arme, die mit der Plattform verbunden sind und dazu angeordnet sind, die Sensoren in Bezug auf die Plattform zwischen einer eingefahrenen Position und einer ausgefahrenen Position zu bewegen, und wobei die Sensoren in der ausgefahrenen Position in einem Abstand von mindestens 0,5 m von der Plattform angeordnet sind, und wobei die Sensoren dazu angeordnet sind, Bewegungen eines Objekts innerhalb der mindestens einen Sicherheitszone zu erkennen, wenn sich die Sensoren in der ausgefahrenen Position befinden.

Eine Aufgabe der Erfindung besteht darin ein verbessertes System zur Objektdetektion bereitzustellen, welches eine höhere Verfügbarkeit aufweist.

Die Aufgabe wird gemäß Anspruch 1 gelöst durch System mit mindestens einem Sensor zur Überwachung mehrerer Schutzbereiche auf Verletzung durch wenigstens ein Objekt und mit einer Steuerung zur Steuerung einer abzusichernden Anlage mit einem mechanisch beweglichen Teil, mit dem Sensor zur mindestens flächigen Überwachung der Schutzbereiche mit einer Steuer- und Auswerteeinheit zur Auswertung der Empfangssignale des Sensors, um festzustellen, welcher der Schutzbereiche durch das Objekt verletzt wird, im Folgenden als Schutzbereichsverletzung bezeichnet, und welchen Schutzbereich das Objekt verlassen hat, im Folgenden als Schutzbereichsfreigabe bezeichnet, mit der Steuerung zur Erzeugung und Ausgabe eines Schaltsignals, das ein Freigabesignal zur Freigabe des Anlagenbetriebs ist.

Die Steuerung ist dazu ausgebildet, das Freigabesignal dann auszugeben, wenn die Steuerung eine vorbestimmte Reihenfolge von Ereignissen erkennt, wobei die Ereignisse aus Schutzbereichsverletzungen und Schutzbereichsfreigaben der Schutzbereiche bestehen und jedes Ereignis entweder eine Schutzbereichsverletzung oder eine Schutzbereichsfreigabe ist.

Das mechanisch bewegliche Teil weist einen ersten Arbeitsbereich und einen zweiten Arbeitsbereich auf, wobei das mechanisch bewegliche Teil sich entweder im ersten Arbeitsbereich oder im zweiten Arbeitsbereich befindet, wobei dem ersten Arbeitsbereich ein erster und ein zweiter Schutzbereich zugeordnet sind, wobei der erste Schutzbereich an den ersten Arbeitsbereich angrenzt und der zweite Schutzbereich an den ersten Schutzbereich angrenzt, wobei der erste Schutzbereich nur über den zweiten Schutzbereich erreichbar ist, wobei dem zweiten Arbeitsbereich ein dritter und ein vierter Schutzbereich zugeordnet sind, wobei der dritte Schutzbereich an den zweiten Arbeitsbereich angrenzt und der vierte Schutzbereich an den dritten Schutzbereich angrenzt, wobei der dritte Schutzbereich nur über den vierten Schutzbereich erreichbar ist.

Die Steuerung ist ausgebildet das mechanisch bewegliche Teil zur starten, wenn ein Objekt den ersten Schutzbereich und danach den zweiten Schutzbereich verlassen hat wodurch eine Schutzbereichsfreigabe im erste Schutzbereich und anschließend im zweiten Schutzbereich vorliegt oder ein Objekt den dritten Schutzbereich und danach den vierten Schutzbereich verlassen hat wodurch eine Schutzbereichsfreigabe im dritten Schutzbereich und anschließend im vierten Schutzbereich vorliegt, wobei wenn das mechanisch bewegliche Teil im ersten Arbeitsbereich aktiv ist bei Schutzbereichsverletzungen im vierten Schutzbereich die Steuerung ausgebildet ist das mechanisch bewegliche Teil in einen ungefährlichen Arbeitsmodus zu schalten und bei Schutzbereichsverletzungen im zweiten Schutzbereich die Steuerung ausgebildet ist das mechanisch bewegliche Teil zu stoppen, wobei wenn das mechanisch bewegliche Teil im zweiten Arbeitsbereich aktiv ist bei Schutzbereichsverletzungen im zweiten Schutzbereich die Steuerung ausgebildet ist das mechanisch bewegliche Teil in einen ungefährlichen Arbeitsmodus zu schalten und bei Schutzbereichsverletzungen im vierten Schutzbereich die Steuerung ausgebildet ist das mechanisch bewegliche Teil zu stoppen.

Die Aufgabe wird weiter gemäß Anspruch 8 gelöst mit einem Verfahren mit mindestens einem Sensor zur Überwachung mehrerer Schutzbereiche.

Bei dem mechanisch beweglichen Teil kann es sich beispielsweise um eine angetriebene Mechanik handeln, insbesondere um einen Roboter, ein Roboterteil, eine bewegliches Maschinenteil oder ähnliches.

Bei der erfindungsgemäßen Lösung wird das mechanisch bewegliche Teil nicht gestoppt, wenn Bearbeitungsgut in dem Arbeitsbereich abgeholt oder abgestellt wird in dem das mechanisch bewegliche Teil gerade nicht arbeitet. Arbeitet das mechanisch bewegliche Teil im ersten Arbeitsbereich, so kann Bearbeitungsgut im zweiten Arbeitsbereich abgeholt oder abgestellt werden. Arbeitet das mechanisch bewegliche Teil im zweiten Arbeitsbereich, so kann Bearbeitungsgut im ersten Arbeitsbereich abgeholt oder abgestellt werden. Dies bietet den Vorteil der erhöhten Produktivität.

Hierzu wird der Bereich vor dem mechanisch beweglichen Teil beispielsweise ein Beladungs-Roboter mit zwei Beladungsplätzen in zwei Arbeitsbereiche, beispielsweise rechter und linker Arbeitsbereich oder auch erster und zweiter Arbeitsbereich aufgeteilt. Jedem der zwei Arbeitsbereiche sind zwei Schutzfelder zugeordnet, so dass insgesamt vier Schutzbereiche bzw. Schutzfelder simultan überwacht werden.

Die Schutzfelder können auch mit zwei oder mehreren Sensoren überwacht werden. Dabei kann ein einzelner erster Sensor beispielsweise den ersten und zweiten Schutzbereich überwachen und ein einzelner zweiter Sensor beispielsweise den dritten und vierten Schutzbereich überwachen. Es kann auch vorgesehen sein, dass ein einzelner erster Sensor beispielsweise den zweiten und vierten Schutzbereich überwacht und ein einzelner zweiter Sensor beispielsweise den ersten und dritten Schutzbereich überwachen.

In dem ersten und zweiten Schutzbereich und in dem dritten und vierten Schutzbereich ist jeweils eine unabhängige Sequenzüberwachung implementiert, bei der die Eintritts- und Austritts-Reihenfolge überwacht wird.

Ein Objekt bzw. eine Person muss zuerst den zweiten Schutzbereich betreten und danach den ersten Schutzbereich betreten, um zulässig den ersten Arbeitsbereich erreichen zu können. Wird der erste Schutzbereich betreten, ohne dass der zweite Schutzbereich vorher betreten wurde, so wird das mechanisch bewegliche Teil unverzüglich gestoppt.

Genauso muss ein Objekt bzw. eine Person zuerst den vierten Schutzbereich betreten und danach den dritten Schutzbereich betreten, um zulässig den zweiten Arbeitsbereich erreichen zu können. Wird der dritte Schutzbereich betreten, ohne dass der vierte Schutzbereich vorher betreten wurde, so wird das mechanisch bewegliche Teil unverzüglich gestoppt.

Ein Hintertreten wird erkannt durch das Freiwerden der Schutzbereiche in der vorgegebenen Reihenfolge.

Jedoch wird bei einem zulässigen Eintritt in das erste oder dritte Schutzfeld, also bei einem beschriebenen vorher erfolgten Eintritt über das zweite und vierte Schutzfeld nicht immer ein Stopp des mechanisch beweglichen Teils eingeleitet. Wenn das mechanisch bewegliche Teil beispielsweise im zweiten Arbeitsbereich arbeitet, so wird bei einem zulässigen Eintritt in das erste Schutzfeld kein Stopp des mechanisch beweglichen Teils eingeleitet, da sich die Person im ersten Schutzbereich in einem sicheren Bereich aufhält. Die Sequenzüberwachung ist weiterhin aktiv, um ein Hintertreten zu erkennen.

Somit kann im ersten Arbeitsbereich ein Bearbeitungsgut abgeholt oder abgestellt werden, ohne das mechanisch bewegliche Teil zu stoppen. Um die Sicherheit zu gewährleisten, wenn die Person nahe an dem mechanisch beweglichen Teil kommt, wird mit Unterbrechung des zweiten Schutzbereichs beispielsweise das mechanisch bewegliche Teil in seiner Geschwindigkeit reduziert oder beispielsweise in einen kollaborativen Betrieb umgeschaltet.

Somit kann auch im zweiten Arbeitsbereich ein Bearbeitungsgut abgeholt oder abgestellt werden, ohne das mechanisch bewegliche Teil zu stoppen. Um die Sicherheit zu gewährleisten, wenn die Person nahe an den mechanisch beweglichen Teil kommt, wird mit Unterbrechung des vierten Schutzbereichs das mechanisch bewegliche Teil beispielsweise in seiner Geschwindigkeit reduziert oder beispielsweise in einen kollaborativen Betrieb umgeschaltet.

Der Vorteil besteht darin, dass das mechanisch bewegliche Teil weiterhin produktiv arbeiten kann und gleichzeitig eine Person das andere Bearbeitungsgut abholen oder abstellen kann. Ein manueller Reset oder ein automatischer Wiederanlauf sind nicht notwendig.

Die Schutzbereiche oder Schutzfelder können beispielsweise beliebige Formen haben, bzw. mit beliebigen Formen konfiguriert sein. Beispielsweise können Teile der Schutzbereiche oder Schutzfelder gerade, gekrümmt, kreisförmig und/oder elliptische Formen aufweisen. Die Form der Schutzbereiche ist beispielsweise lediglich limitiert durch die Winkel- und Entfernungs-Auflösung des Sensors.

In Weiterbildung der Erfindung ist das mechanisch bewegliche Teil ein mechanisch bewegliches Teil zur Beladung von Paletten, wobei jeweils eine Palette in dem ersten Arbeitsbereich und/oder in dem zweiten Arbeitsbereich vorhanden ist.

Gemäß der Weiterbildung wird das mechanisch bewegliche Teil nicht gestoppt, wenn eine Palette in dem Arbeitsbereich abgeholt oder abgestellt wird, in dem das mechanisch bewegliche Teil gerade nicht arbeitet. Arbeitet das mechanisch bewegliche Teil im ersten Arbeitsbereich, so kann eine Palette im zweiten Arbeitsbereich abgeholt oder abgestellt werden. Arbeitet das mechanisch bewegliche Teil im zweiten Arbeitsbereich, so kann eine Palette im ersten Arbeitsbereich abgeholt oder abgestellt werden. Dies bietet den Vorteil der erhöhten Produktivität bei der automatisierten Beladung von Paletten.

In Weiterbildung der Erfindung ist die Steuerung ausgebildet, das Stopp-Signal zu erzeugen, wenn ein Schutzbereich verletzt ist und die vorbestimmte Reihenfolge nicht durchlaufen wurde.

Ein Objekt bzw. eine Person muss zuerst den zweiten Schutzbereich betreten und danach den ersten Schutzbereich betreten, um zulässig den ersten Arbeitsbereich erreichen zu können. Wird der erste Schutzbereich betreten, ohne dass der zweite Schutzbereich vorher betreten wurde, so wird das mechanisch bewegliche Teil unverzüglich gestoppt.

Genauso muss ein Objekt bzw. eine Person zuerst den vierten Schutzbereich betreten und danach den dritten Schutzbereich betreten, um zulässig den zweiten Arbeitsbereich erreichen zu können. Wird der dritte Schutzbereich betreten, ohne dass der vierte Schutzbereich vorher betreten wurde, so wird das mechanisch bewegliche Teil unverzüglich gestoppt.

In Weiterbildung der Erfindung weist die Steuerung einen Zeitgeber auf, so dass die Steuerung überwachen kann, ob aufeinander folgende Ereignisse, also aufeinander folgende Schutzbereichsverletzungen oder aufeinander folgende Schutzbereichsfreigaben innerhalb bestimmter Zeitfenster erfolgen. Die Zeitgeber sind dabei beispielsweise auf die Bewegungsgeschwindigkeit einer Person als Objekt abgestimmt.

In Weiterbildung der Erfindung ist der Sensor ein Laserscanner. Ein Laserscanner ist ein optoelektronischer Sensor, wobei der Sender ein Lichtsender ist und der Empfänger ein Lichtempfänger ist zum berührungslosen Abtasten des Überwachungsbereichs mit den Schutzbereichen, durch Senden von Lichtstrahlen in den Überwachungsbereich und Erfassen rückkehrender reflektierter Lichtstrahlen von Objekten innerhalb des Überwachungsbereichs und Auswerten der rückkehrenden reflektierten Lichtstrahlen durch die Steuer- und Auswerteeinheit.

Beispielsweise handelt es sich bei dem Laserscanner um einen Lichtlaufzeitsensor, also einen Laserscanner basierend auf Lichtlaufzeitauswertung oder eine Lichtlaufzeitkamera. Insbesondere handelt es sich bei dem Laserscanner um einen Sicherheitslaserscanner bzw. jegliche optoelektronische Umfelderfassungssensorik.

Beispielsweise ist eine Mehrzahl von Lichtsendern und eine Mehrzahl von Lichtempfängern angeordnet, wobei die Lichtsender und die Lichtempfänger in einem gemeinsamen Gehäuse angeordnet sind, wobei die Lichtstrahlen in verschiedenen Winkelrichtungen fächerförmig von den Lichtsendern ausgesendet und von den Lichtempfängern empfangen werden, wobei durch die Lichtstrahlen eines Lichtsenders und einem Empfangssichtfeld des Lichtempfängers ein kreissegmentförmiges Teilschutzfeld gebildet ist, wobei die Teilschutzfelder benachbarter Empfangselemente aneinandergrenzen und mehrere Teilschutzfelder einen Schutzbereich bzw. ein Schutzfeld bilden.

Dadurch kommt der Sensor ohne mechanisch bewegliche Teile aus. Es ist kein Drehspiegel oder Schwingspiegel erforderlich. Dadurch ist der Sensor robuster gegenüber Schwing-/Schockbelastungen. Weiter ist der Sensor ohne mechanisch bewegbare Teile kostengünstiger und weist eine höhere Lebensdauer auf.

In einer alternativen Ausgestaltung weist der Laserscanner eine um eine Drehachse drehbare Abtasteinheit auf, mit mindestens einem Abtastmodul zur Abtastung des Überwachungsbereichs im Verlauf der Drehung der Abtasteinheit um die Drehachse und zum Erzeugen von entsprechenden Empfangssignalen sowie der Steuer- und Auswerteeinheit zur Gewinnung von Informationen über die Objekte aus den Empfangssignalen, wobei das Abtastmodul mindestens den Lichtsender zum Aussenden eines Lichtstrahls oder mehrerer voneinander separierten Lichtstrahlen und mindestens den Lichtempfänger zum Erzeugen der Empfangssignale aus den von Objekten remittierten Lichtstrahlen umfasst.

Gemäß der alternativen Ausgestaltung ist nur ein einziger Lichtsender und nur ein einziger Lichtempfänger notwendig, um die flächigen Schutzbereiche zu erzeugen, da der Lichtsender und der Lichtempfänger über die drehbare Abtasteinheit fortlaufend in verschiedenen Winkeln die Umgebung erfassen.

In Weiterbildung der Erfindung ist der Sensor eine 3D-Kamera zur dreidimensionalen Erfassung der Schutzbereiche.

Beispielsweise ist der optoelektronische Sensor zur Erfassung von Objekten in einem dreidimensionalen Überwachungsbereich mit mindestens einem Bildsensor ausgebildet, der mittels einer Vielzahl von Lichtempfangselementen ein Pixelbild des Überwachungsbereichs aufnehmen kann sowie mit mindestens der Steuer- und Auswerteeinheit, die für die Erfassung eines Objekts aus Bilddaten des Pixelbildes ausgebildet ist, wobei eine Mehrzahl von Bildsensoren vorgesehen ist, die jeweils mindestens eine Pixelzeile mit Lichtempfangselementen aufweisen und wobei die Bildsensoren voneinander beabstandet angeordnet sind, so dass jeder Bildsensor eine eigene Ebene des Überwachungsbereichs aufnehmen kann, wobei die Bildsensoren so angeordnet sind, dass die Ebenen untereinander überlappungsfrei und im Wesentlichen parallel zueinander sind oder voneinander fächerförmig von den Bildsensoren ausgehend auseinanderlaufen.

Die Weiterbildung geht dabei beispielsweise von der Idee aus, bekannte kostengünstige Flächensensoren zu erweitern. Mit einer Vervielfältigung und geeigneten Anordnung solcher Sensoren wird auch die Überwachung eines dreidimensionalen Raumbereichs ermöglicht.

In Weiterbildung der Erfindung ist der Sensor ein Radarsensor.

Gemäß der Weiterbildung ist der Sensor ein Radarsensor, wobei der Sender ein Radarsender ist, wobei der Empfänger ein Radarempfänger ist zum berührungslosen Abtasten des Überwachungsbereichs, durch Senden von Funkwellen in den Überwachungsbereich und Erfassen rückkehrender reflektierter Funkwellen von Objekten innerhalb des Überwachungsbereichs und Auswerten der rückkehrenden reflektierten Funkwellen durch die Steuer- und Auswerteeinheit.

Der Radarsensor bzw. eine Radarvorrichtung weist den Radarsender und den Radarempfänger auf, um ein Radarsignal in den Überwachungsbereich auszusenden und von dort wieder zu empfangen. Radarsender und Radarempfänger sind vorzugsweise gemeinsam als Transceiver ausgebildet. Die Steuer- und Auswertungseinheit wertet das Empfangssignal des Radarempfängers aus, um Objekteigenschaften zu bestimmen. Bevorzugt wird dabei ein Abstand aus der Signallaufzeit des Radarsignals gemessen. Andere beispielhafte Objekteigenschaften sind die Geschwindigkeit oder die bloße Feststellung der Anwesenheit oder Abwesenheit von Objekten im ersten Überwachungsbereich.

Die Überwachung mit Radar ist bekannt und wird in vielen Anwendungsfeldern genutzt. Dabei sind verschiedene Prinzipien bekannt, um den Abstand zu einem erfassten Objekt zu messen, beispielsweise Impulsradar, Dauerstrichradar oder FMCW-Radar (Frequency-Modulated Continuous Wave). Auch die direkte Messung einer Geschwindigkeit unter Ausnutzung des Dopplereffekts ist eine typische Radaranwendung.

Radar durchdringt viele Materialien und ist daher relativ robust. Das trifft auch für Witterungseinflüsse, wie Nebel, Regen oder Schnee im Außenbereich zu.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

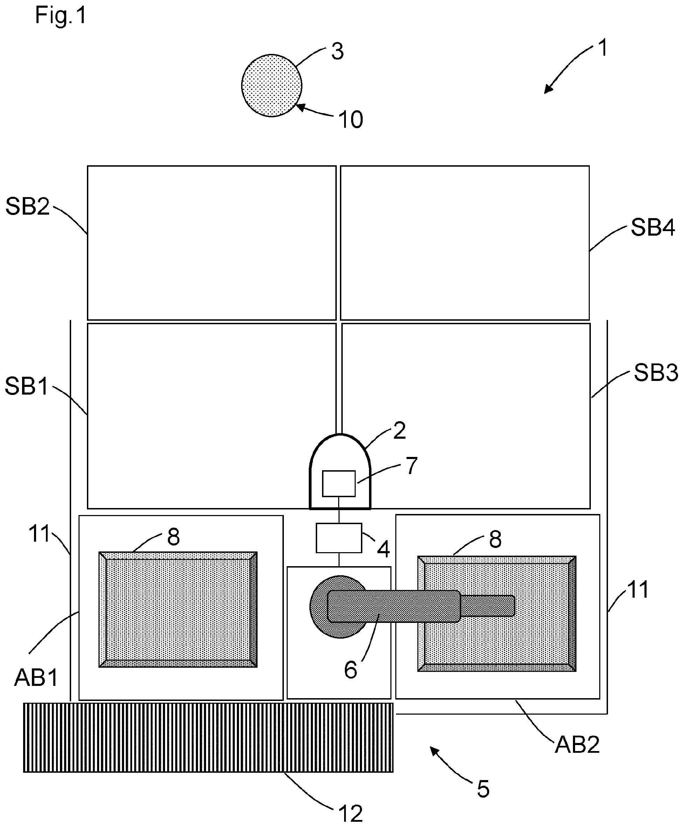

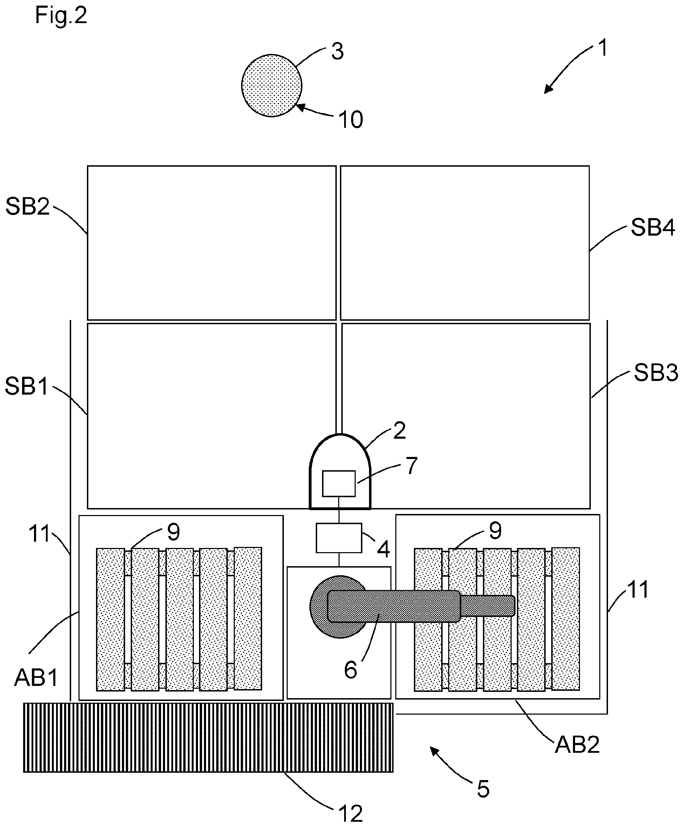

- Figur 1 und 2: jeweils ein System mit mindestens einem Sensor zur Überwachung mehrerer Schutzbereiche.

In den nachfolgenden Figuren sind identische Teile mit identischen Bezugszeichen versehen.

Figur 1 zeigt ein System 1 mit mindestens einem Sensor 2 zur Überwachung mehrerer Schutzbereiche SB1, SB2, SB3, SB4 auf Verletzung durch wenigstens ein Objekt 3 und mit einer Steuerung 4 zur Steuerung einer abzusichernden Anlage 5 mit einem mechanisch beweglichen Teil 6, beispielsweise einem Roboter 6 mit dem Sensor 2 zur mindestens flächigen Überwachung der Schutzbereiche SB1, SB2, SB3, SB4 mit einer Steuer- und Auswerteeinheit 7 zur Auswertung der Empfangssignale des Sensors 2, um festzustellen, welcher der Schutzbereiche SB1, SB2, SB3, SB4 durch das Objekt 3 verletzt wird, im Folgenden als Schutzbereichsverletzung bezeichnet, und welchen Schutzbereich das Objekt 3 verlassen hat, im Folgenden als Schutzbereichsfreigabe bezeichnet, mit der Steuerung 4 zur Erzeugung und Ausgabe eines Schaltsignals, das ein Freigabesignal zur Freigabe des Anlagenbetriebs ist.

Bei dem mechanisch beweglichen Teil 6 kann es sich beispielsweise um eine angetriebene Mechanik handeln, insbesondere um einen Roboter 6, ein Roboterteil, ein bewegliches Maschinenteil oder ähnliches. Im Folgenden wird beispielsweise eine Anwendung mit einem Roboter 6 beschrieben.

Die Steuerung 4 ist dazu ausgebildet, das Freigabesignal dann auszugeben, wenn die Steuerung 4 eine vorbestimmte Reihenfolge von Ereignissen erkennt, wobei die Ereignisse aus Schutzbereichsverletzungen und Schutzbereichsfreigaben der Schutzbereiche SB1, SB2, SB3, SB4 bestehen und jedes Ereignis entweder eine Schutzbereichsverletzung oder eine Schutzbereichsfreigabe ist.

Der Roboter 6 weist mindestens einen ersten Arbeitsbereich AB1 und einen zweiten Arbeitsbereich AB2 auf, wobei der Roboter 6 sich entweder im ersten Arbeitsbereich AB1 oder im zweiten Arbeitsbereich AB2 befindet, wobei dem ersten Arbeitsbereich AB1 ein erster Schutzbereich SB1 und ein zweiter Schutzbereich SB2 zugeordnet sind, wobei der erste Schutzbereich SB1 an den ersten Arbeitsbereich AB1 angrenzt und der zweite Schutzbereich SB2 an den ersten Schutzbereich SB1 angrenzt, wobei der erste Schutzbereich SB1 nur über den zweiten Schutzbereich SB2 erreichbar ist, wobei dem zweiten Arbeitsbereich AB2 ein dritter Schutzbereich SB3 und ein vierter Schutzbereich SB4 zugeordnet sind, wobei der dritte Schutzbereich SB3 an den zweiten Arbeitsbereich AB2 angrenzt und der vierte Schutzbereich SB4 an den dritten Schutzbereich SB3 angrenzt, wobei der dritte Schutzbereich SB3 nur über den vierten Schutzbereich SB4 erreichbar ist.

Der erste Arbeitsbereich AB1, der zweite Arbeitsbereich AB2, der erste Schutzbereich SB1 und der dritte Schutzbereich SB3 sind seitlich mit einer Absperrung 11 gegen Zutritt abgesichert. Die Absperrung 11 kann ein Zaun oder ähnliches sein.

Weiter ist eine Fördervorrichtung 12 vorgesehen, um dem Roboter Material bzw. Güter zuzuführen. Bei der Fördervorrichtung kann es sich beispielsweise um ein Förderband oder ähnliches handeln.

Die Steuerung 4 ist ausgebildet den Roboter 6 zu starten, wenn ein Objekt 3 den ersten Schutzbereich SB1 und danach den zweiten Schutzbereich SB2 verlassen hat wodurch eine Schutzbereichsfreigabe im ersten Schutzbereich SB1 und anschließend im zweiten Schutzbereich SB2 vorliegt oder ein Objekt 3 den dritten Schutzbereich SB3 und danach den vierten Schutzbereich SB4 verlassen hat wodurch eine Schutzbereichsfreigabe im dritten Schutzbereich SB3 und anschließend im vierten Schutzbereich SB4 vorliegt, wobei wenn der Roboter 6 im ersten Arbeitsbereich AB1 aktiv ist bei Schutzbereichsverletzungen im vierten Schutzbereich SB4 die Steuerung 4 ausgebildet ist den Roboter 6 in einen ungefährlichen Arbeitsmodus zu schalten und bei Schutzbereichsverletzungen im zweiten Schutzbereich SB2 die Steuerung 4 ausgebildet ist den Roboter 6 zu stoppen, wobei wenn der Roboter 6 im zweiten Arbeitsbereich AB2 aktiv ist bei Schutzbereichsverletzungen im zweiten Schutzbereich SB2 die Steuerung 4 ausgebildet ist den Roboter 6 in einen ungefährlichen Arbeitsmodus zu schalten und bei Schutzbereichsverletzungen im vierten Schutzbereich SB4 die Steuerung 4 ausgebildet ist den Roboter 6 zu stoppen.

Der Roboter 6 wird nicht gestoppt, wenn Bearbeitungsgut 8 in dem Arbeitsbereich abgeholt oder abgestellt wird in dem der Roboter 6 gerade nicht arbeitet. Arbeitet der Roboter 6 im ersten Arbeitsbereich AB1, so kann Bearbeitungsgut 8 im zweiten Arbeitsbereich AB2 abgeholt oder abgestellt werden. Arbeitet der Roboter 6 im zweiten Arbeitsbereich AB2, so kann Bearbeitungsgut 8 im ersten Arbeitsbereich AB1 abgeholt oder abgestellt werden. Dies bietet den Vorteil der erhöhten Produktivität.

Hierzu wird der Bereich vor dem Roboter 6 beispielsweise ein Beladungs-Roboter mit zwei Beladungsplätzen in zwei Arbeitsbereiche AB1, AB2, beispielsweise linker und rechter Arbeitsbereich oder auch erster Arbeitsbereich AB1 und zweiter Arbeitsbereich AB2 aufgeteilt. Jedem der zwei Arbeitsbereiche AB1, AB2 sind zwei Schutzfelder SB1, SB2, SB3, SB4 zugeordnet, so dass insgesamt vier Schutzbereiche SB1, SB2, SB3, SB4 bzw. vier Schutzfelder simultan überwacht werden.

In dem ersten Schutzbereich SB1 und dem zweiten Schutzbereich SB1 sowie in dem dritten Schutzbereich SB3 und dem vierten Schutzbereich SB4 ist jeweils eine unabhängige Sequenzüberwachung implementiert, bei der die Eintritts- und Austritts-Reihenfolge überwacht wird.

Ein Objekt 3 bzw. eine Person 10 muss zuerst den zweiten Schutzbereich SB2 betreten und danach den ersten Schutzbereich SB1 betreten, um zulässig den ersten Arbeitsbereich AB1 erreichen zu können. Wird der erste Schutzbereich SB1 betreten, ohne dass der zweite Schutzbereich SB2 vorher betreten wurde, so wird der Roboter 6 unverzüglich gestoppt.

Genauso muss ein Objekt 3 bzw. eine Person 10 zuerst den vierten Schutzbereich SB4 betreten und danach den dritten Schutzbereich SB3 betreten, um zulässig den zweiten Arbeitsbereich AB2 erreichen zu können. Wird der dritte Schutzbereich SB3 betreten, ohne dass der vierte Schutzbereich SB4 vorher betreten wurde, so wird der Roboter 6 unverzüglich gestoppt.

Somit wird ein Hintertreten erkannt, bei der eine Person 10 direkt in den Gefahrenbereich also den ersten Arbeitsbereich AB1 oder den zweiten Arbeitsbereich AB2 betreten könnte.

Jedoch wird bei einem zulässigen Eintritt in den ersten Schutzbereich SB1 oder den dritten Schutzbereich SB3, also bei einem beschriebenen vorher erfolgten Eintritt über den zweiten Schutzbereich SB2 und den vierten Schutzbereich SB4 nicht immer ein Stopp des Roboters 6 eingeleitet. Wenn der Roboter 6 beispielsweise im zweiten Arbeitsbereich AB2 arbeitet, so wird bei einem zulässigen Eintritt in den ersten Schutzbereich SB1 kein Stopp des Roboters 6 eingeleitet, da sich die Person 10 im ersten Schutzbereich SB1 in einem sicheren Bereich aufhält. Die Sequenzüberwachung ist weiterhin aktiv, um ein Hintertreten zu erkennen.

Somit kann im ersten Arbeitsbereich AB1 ein Bearbeitungsgut abgeholt oder abgestellt werden, ohne den Roboter 6 zu stoppen. Um die Sicherheit zu gewährleisten, wenn die Person 10 nahe an den Roboter 6 kommt, wird mit Unterbrechung des zweiten Schutzbereichs SB2 beispielsweise der Roboter 6 in seiner Geschwindigkeit reduziert oder beispielsweise in einen kollaborativen Betrieb umgeschaltet.

Somit kann auch im zweiten Arbeitsbereich AB2 ein Bearbeitungsgut abgeholt oder abgestellt werden, ohne den Roboter 6 zu stoppen. Um die Sicherheit zu gewährleisten, wenn die Person 10 nahe an den Roboter 6 kommt, wird mit Unterbrechung des vierten Schutzbereichs SB4 der Roboter 6 beispielsweise in seiner Geschwindigkeit reduziert oder beispielsweise in einen kollaborativen Betrieb umgeschaltet.

Der Vorteil besteht darin, dass der Roboter 6 weiterhin produktiv arbeiten kann und gleichzeitig eine Person 10 das andere Bearbeitungsgut 8 abholen oder abstellen kann.

Die Schutzbereiche SB1, SB2, SB3, SB4 oder Schutzfelder können beispielsweise beliebige Formen haben, bzw. mit beliebigen Formen konfiguriert sein. Beispielsweise können Teile der Schutzbereiche SB1, SB2, SB3, SB4 oder Schutzfelder gerade, gekrümmte, kreisförmige und/oder elliptische Formen aufweisen.

Gemäß Figur 2 ist der Roboter 6 ein Roboter 6 zur Beladung von Paletten 9, wobei jeweils eine Palette 9 in dem ersten Arbeitsbereich AB1 und/oder in dem zweiten Arbeitsbereich AB2 vorhanden ist.

Gemäß der Weiterbildung wird der Roboter 6 nicht gestoppt, wenn eine Palette 9 in dem Arbeitsbereich abgeholt oder abgestellt wird in dem der Roboter gerade nicht arbeitet. Arbeitet der Roboter im ersten Arbeitsbereich AB1, so kann eine Palette 9 im zweiten Arbeitsbereich AB2 abgeholt oder abgestellt werden. Arbeitet der Roboter 6 im zweiten Arbeitsbereich AB2, so kann eine Palette 9 im ersten Arbeitsbereich abgeholt oder abgestellt werden. Dies bietet den Vorteil der erhöhten Produktivität bei der automatisierten Beladung von Paletten 9.

Beispielsweise ist die Steuerung 4 ausgebildet, das Stopp-Signal zu erzeugen, wenn ein Schutzbereich SB1, SB2, SB3, SB4 verletzt ist und die vorbestimmte Reihenfolge nicht durchlaufen wurde.

Beispielsweise weist die Steuerung 4 einen Zeitgeber auf, so dass die Steuerung 4 überwachen kann, ob aufeinander folgende Ereignisse, also aufeinander folgende Schutzbereichsverletzungen oder aufeinander folgende Schutzbereichsfreigaben innerhalb bestimmter Zeitfenster erfolgen. Die Zeitgeber sind dabei beispielsweise auf die Bewegungsgeschwindigkeit einer Person 10 als Objekt 3 abgestimmt.

Beispielsweise ist der Sensor 2 ein Laserscanner. Ein Laserscanner ist ein optoelektronischer Sensor, wobei der Sender ein Lichtsender ist und der Empfänger ein Lichtempfänger ist zum berührungslosen Abtasten des Überwachungsbereichs mit den Schutzbereichen SB1, SB2, SB3, SB4, durch Senden von Lichtstrahlen in den Überwachungsbereich und Erfassen rückkehrender reflektierter Lichtstrahlen von Objekten 3 innerhalb des Überwachungsbereichs und Auswerten der rückkehrenden reflektierten Lichtstrahlen durch die Steuer- und Auswerteeinheit 7.

Beispielsweise handelt es sich bei dem Laserscanner um einen Lichtlaufzeitsensor, also einen Laserscanner basierend auf Lichtlaufzeitauswertung oder eine Lichtlaufzeitkamera. Insbesondere handelt es sich bei dem Laserscanner um einen Sicherheitslaserscanner.

Beispielsweise ist der Sensor eine 3D-Kamera zur dreidimensionalen Erfassung der Schutzbereiche SB1, SB2, SB3, SB4. Beispielsweise ist der Sensor ein Radarsensor.

### Bezugszeichen:

1 System
2 Sensor
SB1 erster Schutzbereich
SB2 zweiter Schutzbereich
SB3 dritter Schutzbereich
SB4 vierter Schutzbereich
3 Objekt
4 Steuerung
5 Anlage
6 mechanisch bewegliches Teil oder Roboter
7 Steuer- und Auswerteeinheit
AB1 erster Arbeitsbereich
AB2 zweiter Arbeitsbereich
8 Bearbeitungsgut
9 Palette
10 Person
11 Absperrung
12 Fördervorrichtung

## Patentansprüche

1. System (1) mit mindestens einem Sensor (2) zur Überwachung mehrerer Schutzbereiche (SB1, SB2, SB3, SB4) auf Verletzung durch wenigstens ein Objekt (3) und mit einer Steuerung (4) zur Steuerung einer abzusichernden Anlage (5) mit einem mechanisch beweglichen Teil (6),
mit dem Sensor (2) zur mindestens flächigen Überwachung der Schutzbereiche (SB1, SB2, SB3, SB4)
mit einer Steuer- und Auswerteeinheit (7) zur Auswertung der Empfangssignale des Sensors (2), um festzustellen, welcher der Schutzbereiche (SB1, SB2, SB3, SB4) durch das Objekt (3) verletzt wird, im Folgenden als Schutzbereichsverletzung bezeichnet, und welchen Schutzbereich (SB1, SB2, SB3, SB4) das Objekt (3) verlassen hat, im Folgenden als Schutzbereichsfreigabe bezeichnet,
mit der Steuerung (4) zur Erzeugung und Ausgabe eines Schaltsignals, das ein Freigabesignal zur Freigabe des Anlagenbetriebs ist,
wobei die Steuerung (4) dazu ausgebildet ist, das Freigabesignal dann auszugeben, wenn die Steuerung (4) eine vorbestimmte Reihenfolge von Ereignissen erkennt, wobei die Ereignisse aus Schutzbereichsverletzungen und Schutzbereichsfreigaben der Schutzbereiche (SB1, SB2, SB3, SB4) bestehen und jedes Ereignis entweder eine Schutzbereichsverletzung oder eine Schutzbereichsfreigabe ist,
wobei das mechanisch bewegliche Teil einen ersten Arbeitsbereich (AB1) und einen zweiten Arbeitsbereich (AB2) aufweist,
wobei das mechanisch bewegliche Teil (6) sich entweder im ersten Arbeitsbereich (AB1) oder im zweiten Arbeitsbereich (AB2) befindet,
wobei dem ersten Arbeitsbereich (AB1) ein erster Schutzbereich (SB1) und ein zweiter Schutzbereich (SB2) zugeordnet sind,
wobei der erste Schutzbereich (SB1) an den ersten Arbeitsbereich (AB1) angrenzt und der zweite Schutzbereich (SB2) an den ersten Schutzbereich (SB1) angrenzt, wobei der erste Schutzbereich (SB1) nur über den zweiten Schutzbereich (SB2) erreichbar ist,
**dadurch gekennzeichnet, dass** dem zweiten Arbeitsbereich (AB2) ein dritter Schutzbereich (SB3) und ein vierter Schutzbereich (SB4) zugeordnet sind, wobei der dritte Schutzbereich (SB3) an den zweiten Arbeitsbereich (AB2) angrenzt und der vierte Schutzbereich (SB4) an den dritten Schutzbereich (SB3) angrenzt, wobei der dritte Schutzbereich (SB3) nur über den vierten Schutzbereich (SB4) erreichbar ist,
wobei die Steuerung (4) ausgebildet ist das mechanisch bewegliche Teil (6) zu starten, wenn ein Objekt (3) den ersten Schutzbereich (SB1) und danach den zweiten Schutzbereich (SB2) verlassen hat wodurch eine Schutzbereichsfreigabe im ersten Schutzbereich (SB1) und anschließend im zweiten Schutzbereich (SB2) vorliegt oder
ein Objekt (3) den dritten Schutzbereich (SB3) und danach den vierten Schutzbereich (SB4) verlassen hat wodurch eine Schutzbereichsfreigabe im dritten Schutzbereich (SB3) und anschließend im vierten Schutzbereich (SB4) vorliegt, wobei wenn das mechanisch bewegliche Teil (6) im ersten Arbeitsbereich (AB1) aktiv ist bei Schutzbereichsverletzungen im vierten Schutzbereich (SB4) die Steuerung (4) ausgebildet ist das mechanisch bewegliche Teil (6) in einen ungefährlichen Arbeitsmodus zu schalten
und bei Schutzbereichsverletzungen im zweiten Schutzbereich (SB2) die Steuerung (4) ausgebildet ist das mechanisch bewegliche Teil (6) zu stoppen, wobei wenn das mechanisch bewegliche Teil (6) im zweiten Arbeitsbereich (AB2) aktiv ist bei Schutzbereichsverletzungen im zweiten Schutzbereich (SB2) die Steuerung (4) ausgebildet ist das mechanisch bewegliche Teil (6) in einen ungefährlichen Arbeitsmodus zu schalten
und bei Schutzbereichsverletzungen im vierten Schutzbereich (SB4) die Steuerung (4) ausgebildet ist das mechanisch bewegliche Teil (6) zu stoppen.

2. System (1) nach Anspruch 1, **dadurch gekennzeichnet, dass** das mechanisch bewegliche Teil (6) ein mechanisch bewegliches Teil (6) zur Beladung von Paletten (9) ist, wobei jeweils eine Palette (9) in dem ersten Arbeitsbereich (AB1) und/oder in dem zweiten Arbeitsbereich (AB2) vorhanden ist.

3. System (1) nach einem der vorhergehenden Ansprüche, **dadurch gekennzeichnet, dass** die Steuerung (4) ausgebildet ist, das Stopp-Signal zu erzeugen, wenn ein Schutzbereich (SB1, SB2, SB3, SB4) verletzt ist und die vorbestimmte Reihenfolge nicht durchlaufen wurde.

4. System (1) nach einem der vorhergehenden Ansprüche, **dadurch gekennzeichnet, dass** das die Steuerung (4) einen Zeitgeber aufweist, so dass die Steuerung (4) überwachen kann, ob aufeinander folgende Ereignisse innerhalb bestimmter Zeitfenster erfolgen.

5. System (1) nach einem der vorhergehenden Ansprüche, **dadurch gekennzeichnet, dass** der Sensor (2) ein Laserscanner ist.

6. System (1) nach einem der vorhergehenden Ansprüche, **dadurch gekennzeichnet, dass** der Sensor (2) eine 3D-Kamera zur dreidimensionalen Erfassung der Schutzbereiche ist.

7. System (1) nach einem der vorhergehenden Ansprüche, **dadurch gekennzeichnet, dass** der Sensor (2) ein Radarsensor ist.

8. Verfahren mit mindestens einem Sensor (2) zur Überwachung mehrerer Schutzbereiche (SB1, SB2, SB3, SB4) auf Verletzung durch wenigstens ein Objekt (3) und mit einer Steuerung (4) zur Steuerung einer abzusichernden Anlage (5) mit einem mechanisch beweglichen Teil (6),
mit dem Sensor (2) zur mindestens flächigen Überwachung der Schutzbereiche (SB1, SB2, SB3, SB4)
mit einer Steuer- und Auswerteeinheit (7) zur Auswertung der Empfangssignale des Sensors (2), um festzustellen, welcher der Schutzbereiche (SB1, SB2, SB3, SB4) durch das Objekt (3) verletzt wird, im Folgenden als Schutzbereichsverletzung bezeichnet, und welchen Schutzbereich (SB1, SB2, SB3, SB4) das Objekt (3) verlassen hat, im Folgenden als Schutzbereichsfreigabe bezeichnet,
mit der Steuerung (4) zur Erzeugung und Ausgabe eines Schaltsignals, das ein Freigabesignal zur Freigabe des Anlagenbetriebs ist,
wobei die Steuerung (4) dazu ausgebildet ist, das Freigabesignal dann auszugeben, wenn die Steuerung (4) eine vorbestimmte Reihenfolge von Ereignissen erkennt, wobei die Ereignisse aus Schutzbereichsverletzungen und Schutzbereichsfreigaben der Schutzbereiche (SB1, SB2, SB3, SB4) bestehen und jedes Ereignis entweder eine Schutzbereichsverletzung oder eine Schutzbereichsfreigabe ist,
wobei das mechanisch bewegliche Teil (6) einen ersten Arbeitsbereich (AB1) und einen zweiten Arbeitsbereich (AB2) aufweist,
wobei das mechanisch bewegliche Teil (6) sich entweder im ersten Arbeitsbereich (AB1) oder im zweiten Arbeitsbereich (AB2) befindet,
wobei dem ersten Arbeitsbereich (AB1) ein erster Schutzbereich (SB1) und ein zweiter Schutzbereich (SB2) zugeordnet sind,
wobei der erste Schutzbereich (SB1) an den ersten Arbeitsbereich (AB1) angrenzt und der zweite Schutzbereich (SB2) an den ersten Schutzbereich (SB1) angrenzt, wobei der erste Schutzbereich (SB1) nur über den zweiten Schutzbereich (SB2) erreichbar ist,
**dadurch gekennzeichnet, dass** dem zweiten Arbeitsbereich (AB2) ein dritter Schutzbereich (SB3) und ein vierter Schutzbereich (SB4) zugeordnet sind, wobei der dritte Schutzbereich (SB3) an den zweiten Arbeitsbereich (AB2) angrenzt und der vierte Schutzbereich (SB4) an den dritten Schutzbereich (SB3) angrenzt, wobei der dritte Schutzbereich (SB3) nur über den vierten Schutzbereich (SB4) erreichbar ist,
wobei das mechanisch bewegliche Teil (6) gestartet wird, wenn ein Objekt (3) den ersten Schutzbereich (SB1) und danach den zweiten Schutzbereich (SB2) verlassen hat wodurch eine Schutzbereichsfreigabe im ersten Schutzbereich (SB1) und anschließend im zweiten Schutzbereich (SB2) vorliegt oder
ein Objekt den dritten Schutzbereich (SB3) und danach den vierten Schutzbereich (SB4) verlassen hat wodurch eine Schutzbereichsfreigabe im dritten Schutzbereich (SB3) und anschließend im vierten Schutzbereich (SB4) vorliegt, wobei wenn das mechanisch bewegliche Teil (6) im ersten Arbeitsbereich (AB1) aktiv ist bei Schutzbereichsverletzungen im vierten Schutzbereich (SB4) das mechanisch bewegliche Teil (6) von der Steuerung (4) in einen ungefährlichen Arbeitsmodus geschaltet wird
und bei Schutzbereichsverletzungen im zweiten Schutzbereich (SB2) das mechanisch bewegliche Teil (6) von der Steuerung (4) gestoppt wird,
wobei wenn das mechanisch bewegliche Teil (6) im zweiten Arbeitsbereich (AB2) aktiv ist bei Schutzbereichsverletzungen im zweiten Schutzbereich (SB2) das mechanisch bewegliche Teil (6) von der Steuerung (4) in einen ungefährlichen Arbeitsmodus geschaltet wird
und bei Schutzbereichsverletzungen im vierten Schutzbereich (SB4) das mechanisch bewegliche Teil (6) von der Steuerung (4) gestoppt wird.

## Claims

1. A system (1) having at least one sensor (2) for monitoring a plurality of protected zones (SB1, SB2, SB3, SB4) for infringement by at least one object (3) and having a controller (4) for controlling a plant (5) to be safeguarded having a mechanically movable part (6),
having the sensor (2) for the at least planar monitoring of the protected zones (SB1, SB2, SB3, SB4),
having a control and evaluation unit (7) for evaluating the received signals of the sensor (2) to determine which of the protected zones (SB1, SB2, SB3, SB4) has been infringed by the object (3), called a protected zone infringement in the following, and which protected zone (SB1, SB2, SB3, SB4) the object (3) has left, called a protected zone release in the following,
having the controller (4) to generate and output a switch signal that is a release signal for the release of the plant operation,
with the controller (4) being configured to output the release signal when the controller (4) recognizes a predefined order of incidents, with the incidents comprising protected zone infringements and protected zone releases of the protected zones (SB1, SB2, SB3, SB4) and with each incident being either a protected zone infringement or a protected zone release,
with the mechanically movable part having a first working zone (AB1) and a second working zone (AB2),
with the mechanically movable part (6) being either in the first working zone (AB1) or in the second working zone (AB2),
with a first protected zone (SB1) and a second protected zone (SB2) being associated with the first working zone (AB1),
with the first protected zone (SB1) being adjacent to the first working zone (AB1) and the second protected zone (SB2) being adjacent to the first protected zone (SB1), with the first protected zone (SB1) only being reachable via the second protected zone (SB2),
**characterized in that** a third protected zone (SB3) and a fourth protected zone (SB4) are associated with the second working zone (AB2),
with the third protected zone (SB3) being adjacent to the second working zone (AB2) and the fourth protected zone (SB4) being adjacent to the third protected zone (SB3), with the third protected zone (SB3) only being reachable via the fourth protected zone (SB4),
with the controller (4) being configured to start the mechanically movable part (6) when an object (3) has left the first protected zone (SB1) and has then left the second protected zone (SB2), whereby a protected zone release is present in the first protected zone (SB1) and subsequently in the second protected zone (SB2), or
an object (3) has left the third protected zone (SB3) and has then left the fourth protected zone (SB4), whereby a protected zone release is present in the third protected zone (SB3) and subsequently in the fourth protected zone (SB4),
with, if the mechanically movable part (6) is active in the first working zone (AB1), on protected zone infringements in the fourth protected zone (SB4), the controller (4) being configured to switch the mechanically movable part (6) into a non-hazardous working mode,
and, on protected zone infringements in the second protected zone (SB2), the controller (4) being configured to stop the mechanically movable part (6),
with, if the mechanically movable part (6) is active in the second working zone (AB2), on protected zone infringements in the second protected zone (SB2), the controller (4) being configured to switch the mechanically movable part (6) into a non-hazardous working mode,
and, on protected zone infringements in the fourth protected zone (SB4), the controller (4) being configured to stop the mechanically movable part (6),

2. A system (1) in accordance with claim 1" **characterized in that** the mechanically movable part (6) is a mechanically movable part (6) for loading pallets (9), with a respective pallet (9) being present in the first working zone (AB1) and/or in the second working zone (AB2).

3. A system (1) in accordance with one of the preceding claims, **characterized in that** the controller (4) is configured to generate the stop signal when a protected zone (SB1, SB2, SB3, SB4) has been infringed and the predefined order was not followed.

4. A system (1) accordance with any one of the preceding claims, **characterized in that** the controller (4) has a timer so that the controller (4) can monitor whether incidents following one another take place within specific time windows.

5. A system (1) in accordance with any one of the preceding claims, **characterized in that** the sensor (2) is a laser scanner.

6. A system (1) in accordance with any one of the preceding claims, **characterized in that** the sensor (2) is a 3D camera for the three-dimensional detection of the protected zones.

7. A system (1) in accordance with any one of the preceding claims, **characterized in that** the sensor (2) is a radar sensor.

8. A method having at least one sensor (2) for monitoring a plurality of protected zones (SB1, SB2, SB3, SB4) for infringement by at least one object (3) and having a controller (4) for controlling a plant (5) to be safeguarded having a mechanically movable part (6),
having the sensor (2) for the at least planar monitoring of the protected zones (SB1, SB2, SB3, SB4),
having a control and evaluation unit (7) for evaluating the received signals of the sensor (2) to determine which of the protected zones (SB1, SB2, SB3, SB4) has been infringed by the object (3), called a protected zone infringement in the following, and which protected zone (SB1, SB2, SB3, SB4) the object (3) has left, called a protected zone release in the following,
having the controller (4) to generate and output a switch signal that is a release signal for the release of the plant operation,
with the controller (4) being configured to output the release signal when the controller (4) recognizes a predefined order of incidents, with the incidents comprising protected zone infringements and protected zone releases of the protected zones (SB1, SB2, SB3, SB4) and with each incident being either a protected zone infringement or a protected zone release,
with the mechanically movable part (6) having a first working zone (AB1) and a second working zone (AB2),
with the mechanically movable part (6) being either in the first working zone (AB1) or in the second working zone (AB2),
with a first protected zone (SB1) and a second protected zone (SB2) being associated with the first working zone (AB1),
with the first protected zone (SB1) being adjacent to the first working zone (AB1) and the second protected zone (SB2) being adjacent to the first protected zone (SB1), with the first protected zone (SB1) only being reachable via the second protected zone (SB2),
**characterized in that** a third protected zone (SB3) and a fourth protected zone (SB4) are associated with the second working zone (AB2),
with the third protected zone (SB3) being adjacent to the second working zone (AB2) and the fourth protected zone (SB4) being adjacent to the third protected zone (SB3), with the third protected zone (SB3) only being reachable via the fourth protected zone (SB4),
with the mechanically movable part (6) being started when an object (3) has left the first protected zone (SB1) and has then left the second protected zone (SB2), whereby a protected zone release is present in the first protected zone (SB1) and subsequently in the second protected zone (SB2), or
an object has left the third protected zone (SB3) and has then left the fourth protected zone (SB4), whereby a protected zone release is present in the third protected zone (SB3) and subsequently in the fourth protected zone (SB4),
with, if the mechanically movable part (6) is active in the first working zone (AB1), on protected zone infringements in the fourth protected zone (SB4), the mechanically movable part (6) being switched into a non-hazardous working mode by the controller (4),
and, on protected zone infringements in the second protected zone (SB2), the mechanically movable part (6) being stopped by the controller (4),
with, if the mechanically movable part (6) is active in the second working zone (AB2), on protected zone infringements in the second protected zone (SB2), the mechanically movable part (6) being switched into a non-hazardous working mode by the controller (4),
and, on protected zone infringements in the fourth protected zone (SB4), the mechanically movable part (6) being stopped by the controller (4),

## Revendications

1. Système (1) comprenant au moins un capteur (2) pour surveiller plusieurs zones de protection (SB1, SB2, SB3, SB4) quant à une violation par au moins un objet (3), et comprenant une commande (4) pour commander une installation à sécuriser (5) pourvue d'une partie mécaniquement mobile (6), le capteur (2) étant destiné à surveiller au moins de façon surfacique les zones de protection (SB1, SB2, SB3, SB4),
comprenant une unité de commande et d'évaluation (7) pour évaluer les signaux de réception du capteur (2), afin de déterminer laquelle des zones de protection (SB1, SB2, SB3, SB4) est violée par l'objet (3), désignée ci-après par violation de zone de protection, et quelle zone de protection (SB1, SB2, SB3, SB4) l'objet (3) a quittée, désignée ci-après par libération de zone de protection,
la commande (4) étant destinée à générer et émettre un signal de commutation qui est un signal d'autorisation pour autoriser le fonctionnement de l'installation,
dans lequel
la commande (4) est conçue pour émettre le signal d'autorisation lorsque la commande (4) détecte un ordre chronologique prédéterminé d'événements, les événements étant constitués de violations de zone de protection et de libérations de zone de protection des zones de protection (SB1, SB2, SB3, SB4), et chaque événement étant soit une violation de zone de protection soit une libération de zone de protection,
la partie mécaniquement mobile présente une première zone de travail (AB1) et une deuxième zone de travail (AB2),
la partie mécaniquement mobile (6) se trouve soit dans la première zone de travail (AB1) soit dans la deuxième zone de travail (AB2),
une première zone de protection (SB1) et une deuxième zone de protection (SB2) sont associées à la première zone de travail (AB1),
la première zone de protection (SB1) est adjacente à la première zone de travail (AB1), et la deuxième zone de protection (SB2) est adjacente à la première zone de protection (SB1), la première zone de protection (SB1) n'étant accessible que par l'intermédiaire de la deuxième zone de protection (SB2),
**caractérisé en ce que**
une troisième zone de protection (SB3) et une quatrième zone de protection (SB4) sont associées à la deuxième zone de travail (AB2),
la troisième zone de protection (SB3) est adjacente à la deuxième zone de travail (AB2), et la quatrième zone de protection (SB4) est adjacente à la troisième zone de protection (SB3), la troisième zone de protection (SB3) n'étant accessible que par l'intermédiaire de la quatrième zone de protection (SB4),
la commande (4) est conçue pour démarrer la partie mécaniquement mobile (6) lorsqu'un objet (3) a quitté la première zone de protection (SB1) et ensuite la deuxième zone de protection (SB2), ce qui constitue une libération de zone de protection dans la première zone de protection (SB1) et ensuite dans la deuxième zone de protection (SB2), ou lorsqu'un objet a quitté la troisième zone de protection (SB3) et ensuite la quatrième zone de protection (SB4), ce qui constitue une libération de zone de protection dans la troisième zone de protection (SB3) et ensuite dans la quatrième zone de protection (SB4),
lorsque la partie mécaniquement mobile (6) est active dans la première zone de travail (AB1), en cas de violations de zone de protection dans la quatrième zone de protection (SB4), la commande (4) est conçue pour commuter la partie mécaniquement mobile (6) vers un mode de travail non dangereux,
et, en cas de violations de zone de protection dans la deuxième zone de protection (SB2), la commande est conçue pour arrêter la partie mécaniquement mobile (6),
lorsque la partie mécaniquement mobile (6) est active dans la deuxième zone de travail (AB2), en cas de violations de zone de protection dans la deuxième zone de protection (SB2), la commande (4) est conçue pour commuter la partie mécaniquement mobile (6) vers un mode de travail non dangereux,
et en cas de violations de zone de protection dans la quatrième zone de protection (SB4), la commande (4) est conçue pour arrêter la partie mécaniquement mobile (6).

2. Système (1) selon la revendication 1,
**caractérisé en ce que** la partie mécaniquement mobile (6) est une partie mécaniquement mobile (6) pour charger des palettes (9), une palette (9) respective étant présente dans la première zone de travail (AB1) et/ou dans la deuxième zone de travail (AB2).

3. Système (1) selon l'une des revendications précédentes,
**caractérisé en ce que** la commande (4) est conçue pour générer le signal d'arrêt lorsqu'une zone de protection (SB1, SB2, SB3, SB4) est violée et que l'ordre chronologique n'a pas été respecté.

4. Système (1) selon l'une des revendications précédentes,
**caractérisé en ce que** la commande (4) comprend une horloge, de sorte que la commande (4) peut surveiller si des événements successifs se produisent dans des fenêtres de temps prédéterminées.

5. Système (1) selon l'une des revendications précédentes,
**caractérisé en ce que** le capteur (2) est un scanner laser.

6. Système (1) selon l'une des revendications précédentes,
**caractérisé en ce que** le capteur (2) est une caméra 3D pour la détection tridimensionnelle des zones de protection.

7. Système (1) selon l'une des revendications précédentes,
**caractérisé en ce que** le capteur (2) est un capteur radar.

8. Procédé avec au moins un capteur (2) pour surveiller plusieurs zones de protection (SB1, SB2, SB3, SB4) quant à une violation par au moins un objet (3) et avec une commande (4) pour commander une installation à sécuriser (5) pourvue d'une partie mécaniquement mobile (6),
le capteur (2) étant destiné à surveiller au moins de façon surfacique les zones de protection (SB1, SB2, SB3, SB4),
avec une unité de commande et d'évaluation (7) pour évaluer les signaux de réception du capteur (2), afin de déterminer laquelle des zones de protection (SB1, SB2, SB3, SB4) est violée par l'objet (3), désignée ci-après par violation de zone de protection, et quelle zone de protection (SB1, SB2, SB3, SB4) l'objet (3) a quittée, désignée ci-après par libération de zone de protection,
la commande (4) étant destinée à générer et émettre un signal de commutation qui est un signal d'autorisation pour autoriser le fonctionnement de l'installation,
dans lequel
la commande (4) est conçue pour émettre le signal d'autorisation lorsque la commande (4) détecte un ordre chronologique prédéterminé d'événements, les événements étant constitués de violations de zone de protection et de libérations de zone de protection des zones de protection (SB1, SB2, SB3, SB4), et chaque événement étant soit une violation de zone de protection soit une libération de zone de protection,
la partie mécaniquement mobile présente une première zone de travail (AB1) et une deuxième zone de travail (AB2),
la partie mécaniquement mobile (6) se trouve soit dans la première zone de travail (AB1) soit dans la deuxième zone de travail (AB2),
une première zone de protection (SB1) et une deuxième zone de protection (SB2) sont associées à la première zone de travail (AB1),
la première zone de protection (SB1) est adjacente à la première zone de travail (AB1), et la deuxième zone de protection (SB2) est adjacente à la première zone de protection (SB1), la première zone de protection (SB1) n'étant accessible que par l'intermédiaire de la deuxième zone de protection (SB2),
**caractérisé en ce que**
une troisième zone de protection (SB3) et une quatrième zone de protection (SB4) sont associées à la deuxième zone de travail (AB2),
la troisième zone de protection (SB3) est adjacente à la deuxième zone de travail (AB2), et la quatrième zone de protection (SB4) est adjacente à la troisième zone de protection (SB3), la troisième zone de protection (SB3) n'étant accessible que par l'intermédiaire de la quatrième zone de protection (SB4),
la partie mécaniquement mobile (6) est démarrée lorsqu'un objet (3) a quitté la première zone de protection (SB1) et ensuite la deuxième zone de protection (SB2), ce qui constitue une libération de zone de protection dans la première zone de protection (SB1) et ensuite dans la deuxième zone de protection (SB2), ou
un objet a quitté la troisième zone de protection (SB3) et ensuite la quatrième zone de protection (SB4), ce qui constitue une libération de zone de protection dans la troisième zone de protection (SB3) et ensuite dans la quatrième zone de protection (SB4),
lorsque la partie mécaniquement mobile (6) est active dans la première zone de travail (AB1), en cas de violations de zone de protection dans la quatrième zone de protection (SB4), la partie mécaniquement mobile (6) est commutée par la commande (4) vers un mode de travail non dangereux, et, en cas de violations de la zone de protection dans la deuxième zone de protection (SB2), la partie mécaniquement mobile (6) est arrêtée par la commande (4),
lorsque la partie mécaniquement mobile (6) est active dans la deuxième zone de travail (AB2), en cas de violations de zone de protection dans la deuxième zone de protection (SB2), la partie mécaniquement mobile (6) est commutée par la commande (4) vers un mode de travail non dangereux,
et en cas de violations de zone de protection dans la quatrième zone de protection (SB4), la partie mécaniquement mobile (6) est arrêtée par la commande (4).
